# EUROPEAN PATENT APPLICATION

(11) **EP 2 944 853 A1**
(43) Date of publication of application: **18.11.2015**
(21) Application number: 14737692.5
(22) Date of filing: 10.01.2014
(51) Int. Cl.: F16K 31/68, F01N 5/02, F16K 31/524

(54) **VALVE DEVICE**

(30) Priority: 11.01.2013 JP 2013003716
(71) Applicant: Futaba Industrial Co. Ltd., Okazaki-shi, Aichi 444-8558 (JP)
(72) Inventor: OKAMI, Hirohisa, Okazaki-shi Aichi 444-8558 (JP); KATO, Hisayuki, Okazaki-shi Aichi 444-8558 (JP)
(74) Representative: Leeming, John Gerard
(86) International application number: PCT/JP2014/050317
(87) International publication number: WO 2014/109382

(57) **Abstract**

To provide a valve device which can maintain the engagement relation between a rod mechanism and a valve mechanism even when the range of advance/retraction of the rod mechanism increases, as well as can achieve downsizing of the entire valve device. In a valve device 1, a pressing rod 215 has a first driving surface 217 which remains in contact with a tip portion 312 from a position away from a rotation axis Axb to at least a position closest to the rotation axis Axb, and a second driving surface 218 which, after the contact relation between the tip portion 312 and the first driving surface 217 is dissolved, remains in contact with the tip portion 312 to a position past the rotation axis Axb.

## Description

### [Technical Field]

The present invention relates to a valve device including a valve mechanism for opening/closing a passage and a rod mechanism for activating the valve mechanism.

### [Background Art]

For example, a valve device described in Patent Literature 1 cited below is known as a valve device including a valve mechanism for opening/closing a passage and a rod mechanism for activating the valve mechanism. The valve device described in Patent Literature 1 advances/retracts a rod through expansion of a thermal expansion body with temperature changes, and activates a valve according to the advance/retraction of the rod.

More specifically, the valve device includes a valve mechanism for opening/closing a rotatably supported valve body by swinging it, and a thermal actuator which is a rod mechanism for thrusting an actuator rod through expansion of a thermal expansion body with temperature changes, and the valve device swings the valve body through the advance/retraction of the actuator rod. To describe the configuration even more specifically, a lower case and an upper case are separably butted against each other so as to form a housing hole inside across both cases; an inflow pipe and an outflow pipe for fluids are connected to the lower case; and the thermal actuator is housed in the housing hole of the lower case, in a direction in which the actuator rod protrudes toward the upper case side. A pressing rod, which is provided coaxially with the actuator rod, is slidably supported in the upper case, and an urging member, which urges the pressing rod toward the actuator rod side, is housed in the housing hole of the upper case.

### [Citation List]

### [Patent Literature]

[Patent Literature 1]
Japanese Patent Laid-Open No. 2010-071454

### [Summary of Invention]

### [Technical Problem]

Configured as described above, the valve device described in Patent Literature 1 can be separated, with the thermal actuator housed in the lower case and the urging member and the pressing rod housed in the upper case, by removing the upper case from the lower case. Thus, this valve device offers advantages in that the thermal actuator can be removed easily from the lower case and that, even when the inflow pipe and the outflow pipe are connected with the lower case, the thermal actuator can be replaced easily without removing the inflow pipe and the outflow pipe.

In the valve device described in Patent Literature 1, the actuator rod and the pressing rod are driven to be able to advance/retract according to the action of the thermal actuator, so that the valve mechanism is opened/closed according to the temperature of a fluid. Therefore, the amount of expansion of the thermal expansion body is appropriately selected and designed so as to achieve a proper range according to the upper temperature limit and the lower temperature limit of the fluid.

In some cases, however, it is required to accommodate fluids of a wider temperature zone in consideration of greater safety. In one instance, it may be required to start opening the valve when the fluid temperature is about 70°C, and then open the valve to 90 degrees, which is a predetermined degree of opening, when the fluid temperature reaches 95°C, and no failure should occur when the fluid temperature reaches as high as 130°C. If a fluid of such a wide temperature band is input into the valve device described in Patent Literature 1, as the actuator rod and the pressing rod travel up to a position where the engagement between the pressing rod and the valve mechanism is broken, so-called overshoot of the actuator rod and the pressing rod occurs. As a result, even when the pressing rod returns to its original position, the engagement between the pressing rod and the valve mechanism is not restored, which may necessitate the removal of the entire valve device for maintenance and repair.

A possible solution to this problem of overshoot is to increase the distance between the point at which the valve mechanism is engaged with the pressing rod and the center of rotation of the valve mechanism such that the engagement between the valve mechanism and the pressing rod is maintained even when the pressing rod advances/retracts significantly. However, taking such a measure would increase the size of the valve mechanism and may exclude the possibility of downsizing the valve device.

Having been devised in view of this problem, the present invention aims to provide a valve device which includes a valve mechanism for opening/closing a passage and a rod mechanism for activating the valve mechanism, and which can maintain the engagement relation between the rod mechanism and the valve mechanism even when the range of advance/retraction of the rod mechanism increases, as well as can achieve downsizing of the entire valve device.

### [Solution to Problem]

In order to solve the above-described problem, the present invention provides a valve device including: a valve mechanism having a valve body which is opened/closed between a closed state and an opened state of a predetermined degree of opening; and a rod mechanism which advances and retracts to thereby activate the valve mechanism. The rod mechanism has a rod which advances and retracts along a sliding axis to thereby open/close the valve body. The valve mechanism is disposed so as to rotate around a rotation axis which is positioned to be skewed relative to the sliding axis and forms an angle of approximately 90 degrees with the sliding axis, and the valve body is opened/closed according to the rotation state of the valve mechanism, and the valve mechanism has an interlocking part of which a tip portion comes into contact with the rod. The rod has a first driving surface which remains in contact with the tip portion from a position away from the rotation axis to at least a position closest to the rotation axis, and a second driving surface which, after the contact relation between the tip portion and the first driving surface is dissolved, remains in contact with the tip portion to a position past the rotation axis.

According to the present invention, since the rod and the tip portion of the interlocking part of the valve mechanism remain in contact with each other such that the valve body is opened/closed between the opened state and the closed state according to the advance/retraction of the rod, opening/closing of the valve body according to the sliding motion of the rod can be realized. Moreover, the rod is provided with the first driving surface and the second driving surface, and the first driving surface remains in contact with the tip portion from a position away from the rotation axis to at least a position closest to the rotation axis, while the second driving surface remains in contact with the tip portion to a position past the rotation axis, and the second driving surface maintains the contact relation with the tip portion after the contact relation between the tip portion and the first driving surface is dissolved. Thus, it is possible, without any special mechanistic contrivance on the valve mechanism side, to maintain the engagement relation between the rod mechanism and the valve mechanism, even when the range of advance/retraction of the rod mechanism increases, by providing, on the rod mechanism side, the first driving surface and the second driving surface which work together to remain in contact with the tip portion of the interlocking part of the valve mechanism.

In the valve device according to the present invention, it is also preferable that the first driving surface and the second driving surface are provided continuously; that the tip portion of the interlocking part remains in contact with the first driving surface and then with the second driving surface, continuously without coming out of contact, according to the advance of the rod; and that the tip portion of the interlocking part remains in contact with the second driving surface and then with the first driving surface, continuously without coming out of contact, according to the retraction of the rod.

If the first driving surface and the second driving surface are thus provided as a continuous surface, the engagement relation between the rod mechanism and the valve mechanism is not broken when the rod advances (when the valve body is opened) as well as when the rod retracts (when the valve body is closed), so that the valve body can be opened/closed smoothly.

In the valve device according to the present invention, it is also preferable that the first driving surface is disposed so as to lie substantially orthogonal to the direction in which the sliding axis extends, while the second driving surface is disposed so as to lie along the direction in which the sliding axis extends.

In this preferred aspect, since the first driving surface is provided so as to lie substantially orthogonal to the direction in which the sliding axis extends, the first driving surface can reliably remain in contact with the tip portion from a position away from the rotation axis to at least a position closest to the rotation axis, and can thereby reliably rotate the interlocking part. Moreover, since the second driving surface is disposed so as to lie along the direction in which the sliding axis extends, even when the rod advances significantly, the length of the second driving surface along the sliding axis can be secured to thereby maintain the reliable contact relation.

### [Advantageous Effects of Invention]

According to the present invention, it is possible to provide a valve device which includes a valve mechanism for opening/closing a passage and a rod mechanism for activating the valve mechanism, and which can maintain the engagement relation between the rod mechanism and the valve mechanism even when the range of advance/retraction of the rod mechanism increases, as well as can achieve downsizing of the entire valve device.

### [Brief Description of Drawings]

[Figure 1] Figure 1 is a schematic perspective view showing a valve device which is an embodiment of the present invention.
[Figure 2] Figure 2 is a schematic cross-sectional view of a rod mechanism shown in Figure 1.
[Figure 3] Figure 3 is an operational view illustrating the action of the valve device shown in Figure 1 and Figure 2.
[Figure 4] Figure 4 is a view showing a first modified example of the embodiment.
[Figure 5] Figure 5 is a view showing a second modified example of the embodiment.

### [Description of Embodiments]

In the following, embodiments of the present invention will be described with reference to the accompanying drawings. To make the description easy to understand, the same components in the drawings will be denoted by the same reference signs as far as possible, while a repeated description thereof will be omitted.

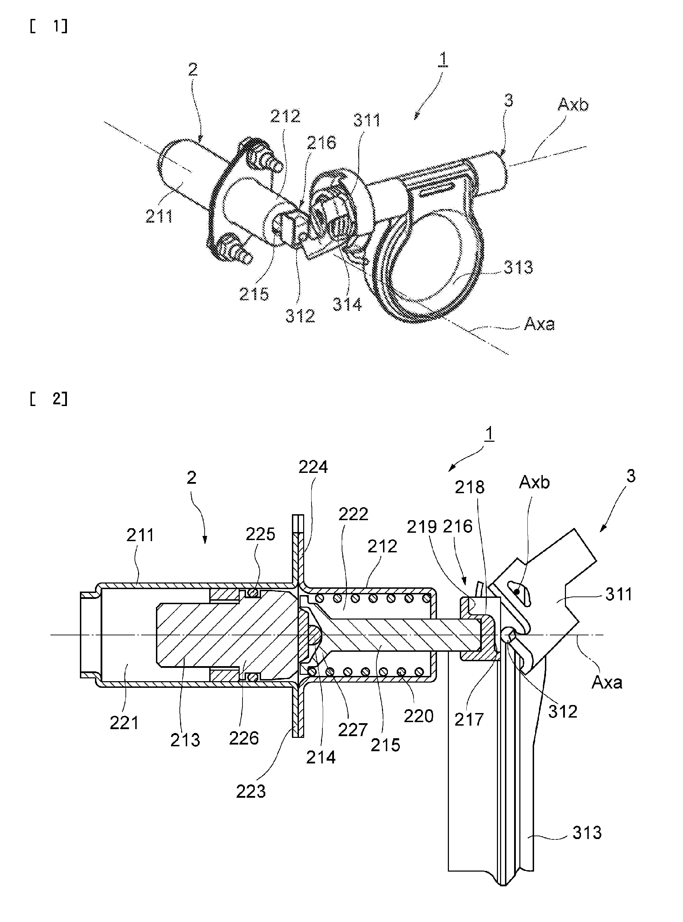

Figure 1 is a schematic perspective view showing a valve device 1 which is an embodiment of the present invention. The valve device 1 is used for an exhaust heat recovery device. The exhaust heat recovery device is a commonly-known device which recovers the exhaust heat of exhaust gas from an internal combustion engine into cooling water of the internal combustion engine. In the exhaust heat recovery device, a bypass passage through which the exhaust gas from the internal combustion engine passes directly, and a heat exchange passage through which heat is exchanged between the exhaust gas and the cooling water, are provided in parallel. The following description of the valve device 1 will, as necessary, refer to the configuration of this exhaust heat recovery device.

The valve device 1 includes a rod mechanism 2 and a valve mechanism 3. The valve mechanism 3 has a valve body 313. The valve body 313 is a valve which is opened/closed between a closed state and an opened state of a predetermined degree of opening, and which opens/closes the bypass passage of the exhaust heat recovery device. When the bypass passage is blocked by a closing action of the valve mechanism 3, the exhaust gas flows through the heat exchange passage, and when the bypass passage is opened by an opening action of the valve mechanism 3, the exhaust gas flows mainly through the bypass passage.

The valve mechanism 3 is rotatably supported on the main body of the exhaust heat recovery device, and is provided so as to rotate around a rotation axis Axb. The valve body 313 is provided so as to be rotatable around the rotation axis Axb, and comes into and out of contact with a valve seat provided on the main body side of the exhaust heat recovery device. The valve body 313 is urged in the direction of closing the valve by a spring 314 serving as an urging member. The valve is opened when the valve body 313 is swung by the rod mechanism 2 against the urging force of the spring 314 serving as an urging member.

An interlocking part 311 is provided on the rod mechanism 2 side of the valve mechanism 3 so as to interlock with the rotation axis Axb and the rotation of the valve body 313. A spherical tip portion 312 is provided in a portion of the interlocking part 311 facing the rod mechanism 2.

The rod mechanism 2 includes a lower case 211 and an upper case 212. A pressing rod 215 is provided so as to protrude from the upper case 212 side toward the valve mechanism 3 side.

Next, the rod mechanism 2 will be further described with reference to Figure 2. Figure 2 is a schematic cross-sectional view of the rod mechanism 2. The lower case 211 includes a hollow cylinder part 221 and a flange part 223 formed at the end of the cylinder part 221.

Similarly, the upper case 212 includes a hollow cylinder part 222 and a flange part 224 formed at the end of the cylinder part 222. The flange part 223 of the lower case 211 and the flange part 224 of the upper case 212 are butted against each other and separably joined with bolts and nuts.

In the lower case 211, an inflow pipe, through which cooling water from the internal combustion engine (not shown) is supplied, is connected at the end of the cylinder part 221. An outflow pipe, which leads the cooling water to the exhaust heat recovery device, is also connected to the lower case 211.

The cylinder part 221 of the lower case 211 houses a thermal actuator 213. The thermal actuator 213 includes a piston 226 which is removably inserted into the cylinder part 221, and an O-ring 225 is fitted on the piston 226 to prevent leakage.

When the thermal actuator 213 is housed in the cylinder part 221, the leading end surface of the piston 226 is disposed almost on the same plane as the surface of the flange part 223, while a clearance, through which the cooling water flows in, is formed between the inner wall of the cylinder part 221 and the outer wall of the thermal actuator 213.

On the inside of the thermal actuator 213, a thermal expansion body is packed and an elastic body is housed. When the thermal expansion body expands due to a temperature rise, the thermal actuator 213 presses one tapered end of the actuator rod 214 through the elastic body to thrust the actuator rod 214 toward the cylinder part 222 of the upper case 212.

The cylinder part 222 of the upper case 212 houses an urging member 220 for which a coil spring etc. is used. The pressing rod 215 is inserted in the cylinder part 222 coaxially with the actuator rod 214, and the pressing rod 215 is supported on the upper case 212 so as to be slidable along the sliding axis Axa.

A flange part 227 projecting in the radial direction is formed on the lower case 211 side of the pressing rod 215, and the urging member 220 urges the pressing rod 215 toward the actuator rod 214 side through the flange part 227.

A conical hole depressed in a conical shape is formed at the end of the pressing rod 215 on the actuator rod 214 side. The leading end of the actuator rod 214 is semispherically formed, and the leading end of the actuator rod 214 is inserted into the conical hole, so that the leading end of the actuator rod 214 is brought into contact with the rear end of the pressing rod 215.

The leading end of the pressing rod 215 protrudes from the upper case 212. A cap 216 is mounted at the leading end of the pressing rod 215. As shown in Figure 2, when the valve body 313 is closed, the cap 216 is at a distance from the interlocking part 311. The tip portion 312 is formed in the interlocking part 311 on a circle centered at the rotation axis Axb, and the direction in which the sliding axis Axa of the actuator rod 214 and the pressing rod 215 extends is disposed so as to coincide with the tangential direction of the circle centered at the rotation axis Axb. Thus, when the pressing rod 215 is thrust, the cap 216 comes into contact with the tip portion 312.

The cap 216 is provided with a first driving surface 217, a second driving surface 218, and a stopper wall 219. The first driving surface 217 is provided at a position facing the tip portion 312 in a normal state. The first driving surface 217 is disposed so as to lie substantially orthogonal to the direction in which the sliding axis Axa extends.

The second driving surface 218 is a surface formed to be continuous with the first driving surface 217, and is a surface extending from the end of the first driving surface 217 on the rotation axis Axb side toward the actuator rod 214 side. The second driving surface 218 is a surface provided so as to lie along the direction in which the sliding axis Axa extends, and in particular, in this embodiment, the second driving surface 218 is provided substantially parallel to the direction in which the sliding axis Axa extends. Shapes of the first driving surface 217 and the second driving surface 218 connected with each other through a smooth curved surface are also included in the above expression "a surface formed to be continuous" within the scope of the present invention.

The stopper wall 219 is provided at the end opposite from the end where the second driving surface 218 is connected with the first driving surface 217. The installation position of the stopper wall 219 is determined depending on the temperature range within which the action of the rod mechanism 2 is to be guaranteed.

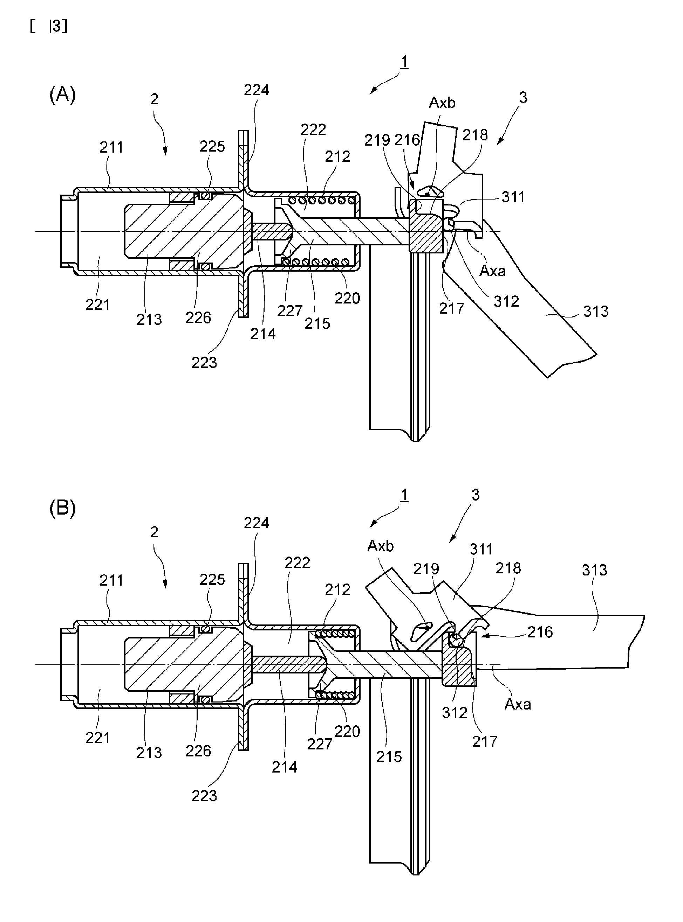

Next, the action of the valve device 1 will be described with reference to Figure 3. Figure 3 is a view illustrating the action of the valve device 1. Figure 3(A) shows a state where the actuator rod 214 and the pressing rod 215 are driven and the valve body 313 starts to be slightly opened, and Figure 3(B) shows a state where the actuator rod 214 and the pressing rod 215 are further driven and the valve body 313 is opened to 90 degrees which is a predetermined angle. The action of the valve device 1 will be described along with the action of the exhaust heat recovery device.

When the valve body 313 is closed, the exhaust heat recovery device leads the exhaust gas from the internal combustion engine into the heat exchange passage to exchange heat between the exhaust gas and the cooling water and thereby recovers the exhaust heat. When the pressure of the exhaust gas increases, the valve body 313, under the pressure of the exhaust gas, swings around the rotation axis Axb against the urging force of the spring 314 and is opened. As a result, the exhaust gas passes through the bypass passage and is discharged to an exhaust passage on the downstream side.

In the valve device 1, the cooling water flows into the cylinder part 221 through the inflow pipe, and flows out to the exhaust heat recovery device through the outflow pipe. When the temperature of the cooling water flowing into the cylinder part 221 is low, as shown in Figure 2, as the thermal expansion body does not expand, the actuator rod 214 is in a retracted state, and the pressing rod 215 is in a retracted state by being pressed toward the actuator rod 214 side by the urging force of the urging member 220. Thus, the valve mechanism 3 is opened/closed according to the pressure of the exhaust gas.

In the valve device 1, when the temperature of the cooling water flowing into the cylinder part 221 rises, the thermal expansion body expands and presses the tapered end of the actuator rod 214. Then, the actuator rod 214 is thrust while sliding inside the piston 226, and presses the pressing rod 215 against the urging force of the urging member 220.

When the pressing rod 215 is pressed and thrust by the actuator rod 214, the pressing rod 215 presses the tip portion 312 of the interlocking part 311 in the tangential direction, causing the interlocking part 311 to rotate around the rotation axis Axb. As a result, the valve mechanism 3 is opened, and the exhaust gas passes through the bypass passage and is discharged.

As shown in Figure 3(A), the first driving surface 217 of the cap 216 of the pressing rod 215 first comes into contact with the tip portion 312 and pushes back the tip portion 312. Since the tip portion 312 rotates around the rotation axis Axb, it shifts toward the second driving surface 218 side of the first driving surface 217. Then, as shown in Figure 3(B), the contact surface shifts from the first driving surface 217 to the second driving surface 218, and the tip portion 312 comes into contact with the second driving surface 218. Thus, the tip portion 312 is driven while maintaining the contact with the first driving surface 217 and then with the second driving surface 218. Therefore, even when the cooling water temperature decreases and the pressing rod 215 retracts from the state shown in Figure 3(B), the tip portion 312 is driven while maintaining the contact with the second driving surface 218 and then with the first driving surface 217.

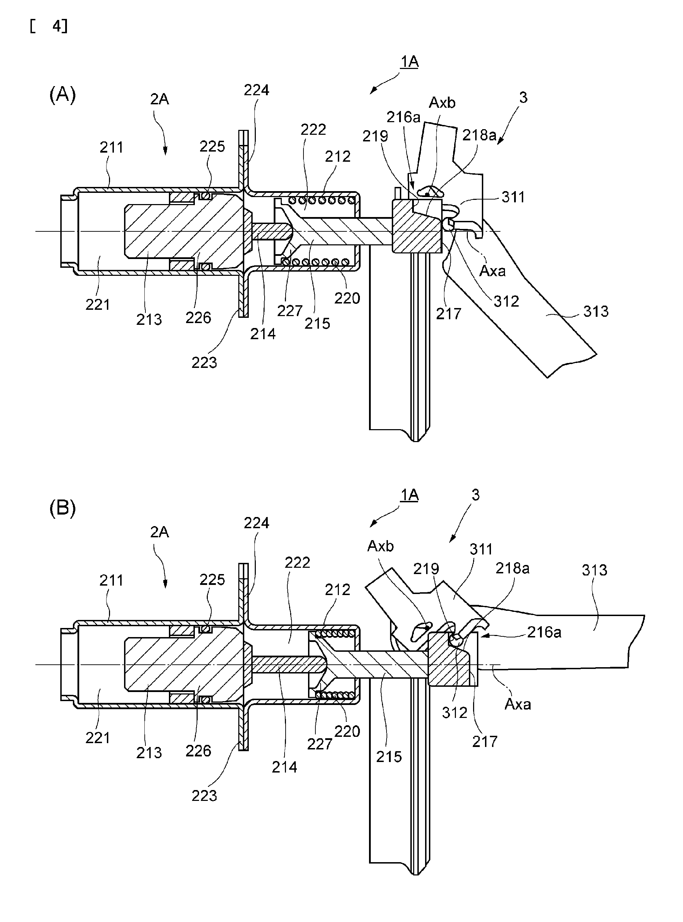

In the above-described embodiment, the second driving surface 218, which is provided along the sliding axis Axa, is provided substantially parallel to the sliding axis Axa. However, it is also a preferred aspect in which the second driving surface 218 is provided so as to form a certain angle with the sliding axis Axa. This aspect will be described with reference to Figure 4.

Figure 4 is a view showing a valve device 1A which is a first modified example of the embodiment. Figure 4(A) shows a state where the actuator rod 214 and the pressing rod 215 are driven and the valve body 313 starts to be slightly opened, and Figure 4(B) shows a state where the actuator rod 214 and the pressing rod 215 are further driven and the valve body 313 is opened to 90 degrees which is a predetermined angle.

As shown in Figure 4, a cap 216a mounted at the leading end of the pressing rod 215 of a rod mechanism 2A has a second driving surface 218a which extends along the sliding axis Axa but not parallel to the sliding axis Axa. The aspect of the tip portion 312 moving in contact with the first driving surface 217 and the second driving surface 218a is the same as described above. However, since the second driving surface 218a is inclined so as to come farther away from the sliding axis Axa and come closer to the rotation axis Axb as it extends away from the first driving surface 217, the valve body 313, as a result, is opened to 90 degrees or more. Thus, this aspect is preferable, for example, when a larger degree of opening of the valve body 313 is to be secured.

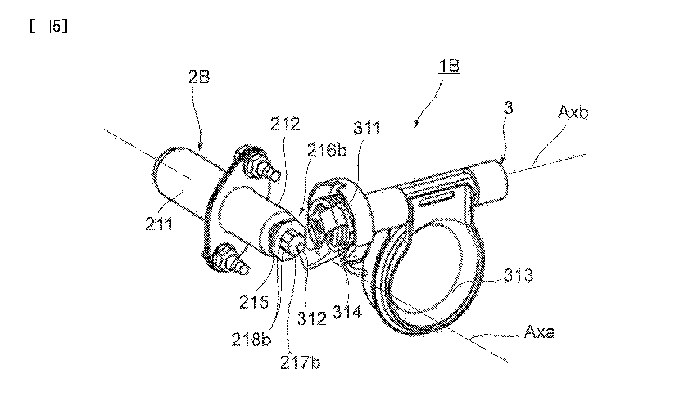

In the above-described embodiment, one first driving surface 217 and one second driving surface 218 are provided, but it is also a preferred aspect in which a plurality of second driving surfaces 218 are provided. This aspect will be described with reference to Figure 5.

Figure 5 is a perspective view showing a valve device 1B which is a second modified example of the embodiment. As shown in Figure 5, a cap 216b mounted at the leading end of the pressing rod 215 of a rod mechanism 2B has one first driving surface 217b formed in a regular octagonal shape, and second driving surfaces 218b connected to the respective sides of the perimeter of the first driving surface 217.

In the embodiment shown in Figure 1 to Figure 3, a concave shape in cross-section, of which the bottom coincides with the center of the tip portion 312 in the sliding direction, is formed so that the tip portion 312 slides smoothly over the first driving surface 217 and the second driving surface 218. However, it is also a preferred aspect in which the first driving surface 217 and the second driving surface 218 have a flat plate shape.

In the above-described embodiment, when the second driving surface 218 and the tip portion 312 come into contact with each other, a force from a lateral side relative to the sliding direction of the pressing rod 215 is applied. Therefore, it is also a preferred aspect in which some means for holding the pressing rod 215 so as not to bend is provided in order to mitigate or remove the influence of the force applied from the tip portion 312.

The present invention is in no way limited to these embodiments, but can be implemented in various forms within the scope of the present invention.

### [Reference Signs List]

- 1: Valve device
- 1A: Valve device
- 1B: Valve device
- 2: Rod mechanism
- 2A: Rod mechanism
- 2B: Rod mechanism
- 3: Valve mechanism
- 211: Lower case
- 212: Upper case
- 213: Thermal actuator
- 214: Actuator rod
- 215: Pressing rod
- 216: Cap
- 216a: Cap
- 216b: Cap
- 217: First driving surface
- 217b: First driving surface
- 218: Second driving surface
- 218a: Second driving surface
- 218b: Second driving surface
- 219: Stopper wall
- 220: Urging member
- 221: Cylinder part
- 222: Cylinder part
- 223: Flange part
- 224: Flange part
- 225: Ring
- 226: Piston
- 227: Flange part
- 311: Interlocking part
- 312: Tip portion
- 313: Valve body
- Axa: Sliding axis
- Axb: Rotation axis

## Claims

1. A valve device comprising:
a valve mechanism having a valve body which is opened/closed between a closed state and an opened state of a predetermined degree of opening; and
a rod mechanism which advances and retracts to thereby activate the valve mechanism, wherein
the rod mechanism has a rod which advances and retracts along a sliding axis to thereby open/close the valve body,
the valve mechanism is disposed so as to rotate around a rotation axis which is positioned to be skewed relative to the sliding axis and forms an angle of approximately 90 degrees with the sliding axis, and the valve body is opened/closed according to the rotation state of the valve mechanism, and the valve mechanism has an interlocking part of which a tip portion comes into contact with the rod, and
the rod has a first driving surface which remains in contact with the tip portion from a position away from the rotation axis to at least a position closest to the rotation axis, and a second driving surface which, after the contact relation between the tip portion and the first driving surface is dissolved, remains in contact with the tip portion to a position past the rotation axis.

2. The valve device according to claim 1, wherein the first driving surface and the second driving surface are provided continuously, and the tip portion of the interlocking part remains in contact with the first driving surface and then with the second driving surface, continuously without coming out of contact, according to the advance of the rod, and the tip portion of the interlocking part remains in contact with the second driving surface and then with the first driving surface, continuously without coming out of contact, according to the retraction of the rod.

3. The valve device according to claim 1, wherein
the first driving surface is disposed so as to lie substantially orthogonal to the direction in which the sliding axis extends, and
the second driving surface is disposed so as to lie along the direction in which the sliding axis extends.
